# EUROPEAN PATENT APPLICATION

(11) **EP 4 807 924 A2**
(43) Date of publication of application: **16.09.2026**
(21) Application number: 26186983.8
(22) Date of filing: 23.06.2026
(51) Int. Cl.: H02G 1/08

(54) **WIRE PUSHING TOOL**

(71) Applicant: HILTI Aktiengesellschaft, 9494 Schaan (LI); Karlsruher Institut für Technologie, 76131 Karlsruhe (DE)
(72) Inventor: Mahringer, Dennis, 87435 Kempten (DE); Schaub, Adam, 86199 Augsburg (DE); Emzev, Ronald, 76131 Karlsruhe (DE); Menke, Veit, 76131 Karlsruhe (DE); Raff, Timo, 76131 Karlsruhe (DE); Schliffka, Karl, 76131 Karlsruhe (DE); Walter, Gregor, 76131 Karlsruhe (DE); Yazgan, Serhan, 76131 Karlsruhe (DE); Matthiesen, Sven, 76131 Karlsruhe (DE); Hasenöhrl, Sascha, 76131 Karlsruhe (DE)
(74) Representative: Hilti Aktiengesellschaft Corporate Intellectual Property

(57) **Abstract**

A wire pushing tool (1) for conveying a cable (5) along a conveying path is provided. The tool comprises a drivetrain enclosure (10), a plurality of rollers (20) configured to engage and convey the cable (5), and a plurality of driven wheels (21, 22) associated with the rollers (20). Each driven wheel is rotationally fixed to a corresponding roller or formed integrally therewith. A drive gear (24) driven by a motor (4) meshes with at least one first driven wheel (21), and a secondary gear (25) meshes with the drive gear (24) and drives at least one second driven wheel (22), such that the rollers are synchronously driven. A biasing mechanism (26), preferably comprising at least one spring, urges one or more driven wheels toward the cable (5), allowing automatic adjustment of the spacing between rollers (20) to accommodate different cable diameters without manual intervention. The movable driven wheel may be guided in a slot to ensure reliable engagement.

## Description

### FIELD OF THE INVENTION

The present invention relates to cable conveying devices, and more particularly to handheld, motor-driven wire pushing tools designed to feed or retract cables, wires, or similar elongate flexible elements into conduits, ducts, installation structures, or support assemblies.

### BACKGROUND ART

Installing electrical cables, wires, fish tapes or satellite cables into conduits typically requires manual pushing or additional tools such as fish tapes or pulling rods. These methods are labor-intensive, slow, and often require two workers-one guiding the cable and another feeding it. Power-assisted wire feeding tools are known in the art. Such devices often use rollers, belts, or worm-drive mechanisms to grip and push the cable. However, many conventional devices require manual adjustment of roller spacing or use fixed-geometry rollers that only accommodate a narrow diameter range. This reduces usability and may damage cables. Some prior art devices drive only a subset of rollers or rely on frictional coupling. This may result in slippage, uneven traction, or loss of conveying force, particularly in situations of high cable friction or long distances.

There exists a need for a compact cordless handheld tool that provides strong conveying force across a wide range of cable diameters, ensures synchronized, reliable traction through all rollers, automatically adapts to cable size, and integrates optional directional alternation, speed adaptation, and safety functions suitable for modern installation workflows. The present invention addresses these needs.

### SUMMARY OF THE INVENTION

The invention provides a wire pushing tool for conveying a cable along a conveying path comprising a drivetrain enclosure in which a plurality of rollers is arranged to engage the cable during operation.

A plurality of driven wheels comprising first driven wheels and second driven wheels, wherein each driven wheel is rotationally fixed to a corresponding roller or is formed integrally with the corresponding roller so as to be rotationally fixed thereto. A drive gear, operatively connected to a motor and rotatable about a drive axis, is arranged to mesh with and drive at least one of the first driven wheels. A secondary gear meshes with the drive gear and is arranged to mesh with and drive at least one of the second driven wheels, such that rotation of the drive gear drives the driven wheels and the corresponding rollers in synchronized rotation.

A biasing mechanism is configured to urge the first driven wheel and/or the second driven wheel, and the respective corresponding roller, toward the cable, such that a spacing between the rollers automatically adapts to a diameter of the cable. In particular, the biasing mechanism may comprise at least one spring arranged to apply a preload to the first driven wheel and/or the second driven wheel, wherein any driven wheel to which the preload is applied is movable relative to the conveying path so as to enable automatic adaptation of the spacing between the rollers to different cable diameters without user adjustment.

According to one embodiment, each roller comprises a cable-contacting surface, which may be concave, convex, angled, or flat. In a preferred embodiment, the cable-contacting surface is concave and arranged to center the cable within the conveying path. This improves stability and avoids lateral slipping, thereby increasing the transmission of driving force.

According to a further embodiment, the plurality of rollers comprises at least two rollers arranged on opposite sides of the conveying path. Thus, the cable remains stable and does not skew sideways during pushing or pulling.

According to a further embodiment, the plurality of rollers comprises four rollers arranged symmetrically around the conveying path. A symmetrical layout ensures that the pushing forces are evenly distributed around the cable circumference, increasing both efficiency and cable protection.

According to a further embodiment, the tool comprises a handle in which a motor and a transmission mechanism are housed, and the drive gear is connected to the transmission mechanism, which is coupled to the motor. The handle acts as a compact housing for powering components and simplifies user operation by integrating all controls into one grip. This improves ergonomics and makes the unit portable and cordless.

According to a further embodiment, one of the driven wheels is movable relative to the conveying path while the other driven wheel is fixed in position within the drivetrain enclosure. In particular, the movable driven wheel may be mounted in a guide slot formed in the drivetrain enclosure so as to be movable along the guide slot. The guide slot may define a predetermined movement path for the driven wheel, permitting displacement toward and away from the conveying path while maintaining meshing engagement with the corresponding gear. This ensures that synchronization is never lost, even during strong cable forces. The guide slot may be shaped to permit arcuate, radial, or pivot-like movement of the driven wheel, thereby supporting automatic adaptation of the spacing between the rollers.

In a further embodiment, the biasing mechanism applies a preload to the movable driven wheel such that the driven wheel remains in meshing engagement with the corresponding gear while moving along the guide slot. The preload from the biasing mechanism ensures that varying cable sizes are accommodated smoothly while maintaining sufficient contact force.

According to a further embodiment, the wire pushing tool further comprises an entry cable funnel arranged at an entry side of the drivetrain enclosure and configured to guide the cable toward the rollers during insertion. A cable funnel helps users align the cable correctly and reduces the risk of misfeeding.

According to a further embodiment, the tool further comprises an exit-side cable deflector arranged downstream of the rollers and configured to guide the cable into a conduit or installation structure. The cable deflector is flexible and configured to bend the cable in all directions. A flexible deflector reduces risk of kinking and allows routing in tight building environments.

According to a further embodiment, the rotational speed of the drive gear is automatically adjusted based on a detected cable diameter. Detecting cable thickness allows the system to optimize torque and speed for each cable size.

The invention therefore provides a wire pushing tool capable of reliable, synchronized cable conveying, combined with automatic roller spacing adjustment, improved cable guidance, and optional intelligent control features. These aspects collectively enable efficient cable installation and removal across a wide range of cable diameters and installation environments.

### BRIEF DESCRIPTION OF THE DRAWINGS

Further embodiments, features and advantages of the present invention will become apparent from the subsequent description and dependent claims, taken in conjunction with the accompanying drawings, in which:
Fig. 1 is a perspective view of the wire pushing tool showing the handle and the drivetrain enclosure.
Fig. 2 is a side view of the drivetrain enclosure.
Fig. 3 is a partial schematic view illustrating details of the drivetrain arrangement and connections within the drivetrain enclosure and the handle housing.
Fig. 4 is a sectional view illustrating details of the drivetrain arrangement.
Fig. 5 is a partial schematic view showing details of the drivetrain arrangement, including the biasing mechanism, guide slots, and driven wheels.
Fig. 6 is a further partial schematic view of the drivetrain arrangement, illustrating the biasing mechanism and the guide slots from a different perspective.

### DETAILED DESCRIPTION OF EMBODIMENTS

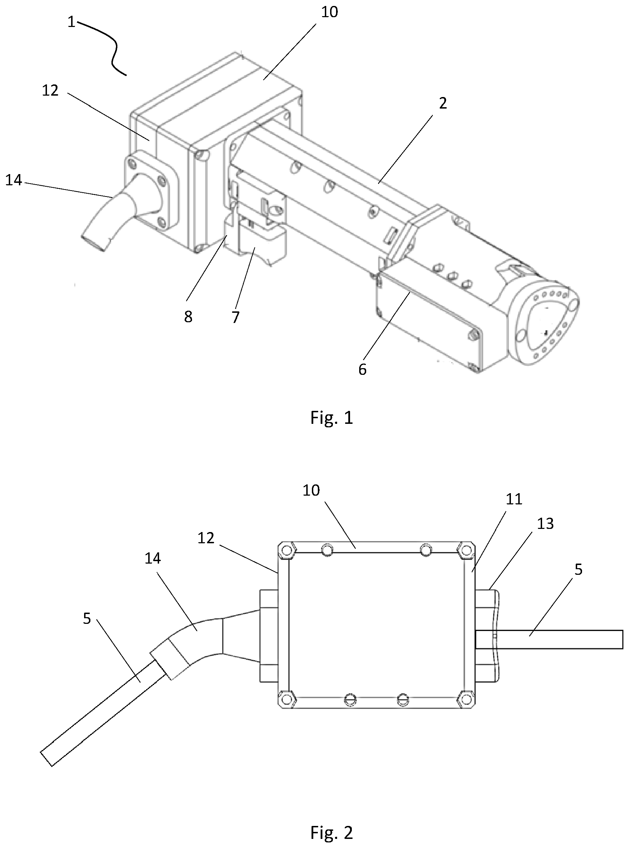

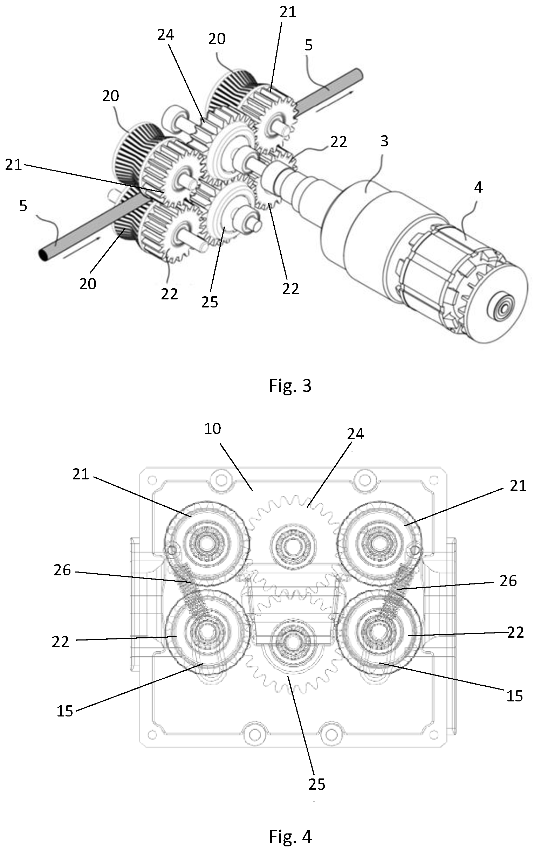

The present invention provides a wire pushing tool 1 configured for conveying a cable 5 along a conveying path. Referring to Figs.1 and 3, the wire pushing tool 1 includes a drivetrain enclosure 10 and a handle 2 connected to a side of the drivetrain enclosure 10. Preferably, the handle 2 serves as a housing portion that houses the motor 4, transmission 3, and electronic control board (not shown). In other words, the motor 4, the transmission 3, and electronic control board for operating the device are integrated into the handle. The motor 4 may be a brushless motor and the transmission 3 could be a two-stage planetary transmission. Both the motor and the transmission 3 are located in the front part of the handle 2 directly at the connection to the drivetrain enclosure 10. As shown in Fig.1, the control board is installed in a casing 6 in the rear part of the handle 2. Alternatively, the control board could also be placed in another position.

The handle 2 may include a variable-speed trigger 7 for controlling the conveying speed and a three-position toggle switch 8 for selecting forward, locked, or reverse rotation. The variable-speed trigger 7 and toggle switch 8 may be located in the front portion of the handle 2 between the transmission and drivetrain enclosure 10. Optional control features may include automatic alternation of forward and backward rotation to overcome obstructions in the conduit, automatic speed adjustment based on detected cable diameter or load conditions such as motor current, and overload protection mechanisms that enhance operational safety.

Preferably, openings may be provided in the handle 2 for active cooling of the motor. **The** compact handle arrangement enables handheld, cordless operation when powered by an appropriate battery system.

Referring to Figs.1 and 2, the drivetrain enclosure 10 has an entry side 11 and an exit-side 12. A cable funnel 13 is attached to the entry side 11 to make it easier to insert the cable. On the exit-side 12, the cable is guided through a cable deflector 14, which may be rotatable and/or flexible, to facilitate insertion into a conduit or installation structure. **In** a preferred embodiment, the cable deflector 14 is flexible and configured to bend the cable in any direction. A flexible deflector reduces risk of kinking and allows routing in tight building environments.

Fig.3 shows the details of the drivetrain system by removing the drivetrain enclosure 10 and handle housing. Within the drivetrain enclosure, multiple rollers 20 are arranged so as to contact and advance the cable 5. Each roller is rotationally fixed to a corresponding driven wheel, including first driven wheels 21 and second driven wheels 22. Alternatively, one or more driven wheels may be formed integrally with the corresponding rollers so as to be rotationally fixed thereto. The driven wheels and rollers together form a synchronized drive system. The rollers 20 may be arranged on opposite sides of the conveying path so that the cable 5 is guided between two opposing rollers.

The drivetrain includes the drive gear 24 and the secondary gear 25. The drive gear 24 meshes with at least one first driven wheel 21, while the secondary gear 25 meshes with the drive gear 24 and with at least one second driven wheel 22. The motor 4, housed within a handle of the tool, provides rotational input to a drive gear 24. The drive gear 24 rotates about a drive axis and drives the first driven wheels 21 to rotate synchronously. A secondary gear 25 meshes with the drive gear 24, preferably, arranged below the drive gear 24 and fixed to drivetrain enclosure 10, so that the secondary gear 25 will be driven by the drive gear 24 and rotates synchronously when the drive 24 rotates. The secondary gear 25 further meshes with at least one of the second driven wheels 22, for example, two second driven wheels 22 arranged on the left and right side of the secondary gear 25 respectively, so the secondary gear 25 could cause the second driven wheels 22 to rotate, too, when it rotates driven by the drive gear 24. Therefore, the rotation of the drive gear 24 causes all driven wheels 21, 22 and rollers 20 to rotate in synchrony.

In the embodiment shown in Figs. 3 and 4, four rollers are arranged symmetrically around the conveying path, providing balanced conveying forces and reducing the likelihood of lateral slipping or cable deformation. A symmetrical layout ensures that the pushing forces are evenly distributed around the cable circumference, increasing both efficiency and cable protection. It can also be understood that two rollers arranged on opposite sides of the conveying path may already be sufficient in alternative embodiments. Alternatively, more than 4 rollers could be optional. More rollers may bring more contact area with the cable, improving traction and reducing slippage. The pulling force is spread across multiple rollers, reducing wear and tear on individual components.

According to one embodiment of the present invention, each roller 20 may have a cable-contacting surface , which may be concave, convex, angled, or flat. In a preferred embodiment, the cable-contacting surface is concave and centers the cable 5 within the conveying path, and also increases the contact area for improved traction.

At least one of the driven wheels 21 and 22 is movable relative to the conveying path. In certain embodiments, one driven wheel may be fixed in position while the other driven wheel is movable. The movable driven wheel may be mounted in a guide slot 15 formed in the drivetrain enclosure 10 so as to be movable along the guide slot 15. The guide slot 15 defines a predetermined movement path along which the driven wheel may move toward and away from the conveying path.

A biasing mechanism 26 is provided within the drivetrain enclosure 10. The biasing mechanism 26 is configured to apply a preload to one or more of the driven wheels 21, 22. Any driven wheel to which the preload is applied is movable relative to the conveying path, thereby enabling automatic adaptation of the spacing between the rollers 20 to different cable diameters without user adjustment.

In one embodiment, the biasing mechanism 26 comprises one or more springs that urge the movable driven wheel toward the cable 5. When a cable of larger diameter is introduced, the movable driven wheel is displaced along the guide slot against the preload force, thereby increasing the spacing between the rollers while maintaining contact with the cable.

The guide slot 15 is configured such that meshing engagement between the movable driven wheel and the corresponding gear 24, 25 is maintained throughout the movement. The guide slot 15 may be curved and shaped to permit arcuate, radial, or pivot-like movement of the driven wheel, ensuring consistent alignment and torque transmission during displacement.

Referring to Fig. 4, both the first driven wheel 21 and the second driven wheel 22 are movable.

The first driven wheel 21 and the second driven wheel 22 are mounted in the respective guide slots formed in the drivetrain enclosure 10. The biasing mechanism 26, such as one or more springs connected to the first driven wheel 21 and the second driven wheel 22 respectively. The spring applies a preload force urging the movable first driven wheel 21 and second driven wheel 22 toward the cable 5. When a thicker cable is inserted between the rollers 20, the first driven wheel 21 and the second driven wheel 22 move along the guide slot 15 against the preload. The biasing mechanism 26 and guide slot 15 ensures continuous contact between the rollers 20 and the cable 5, consistent conveying force, and stable meshing engagement between the first driven wheel 21 and the drive gear 24, as well as the engagement between the second driven wheels 22 and the secondary gear 25.

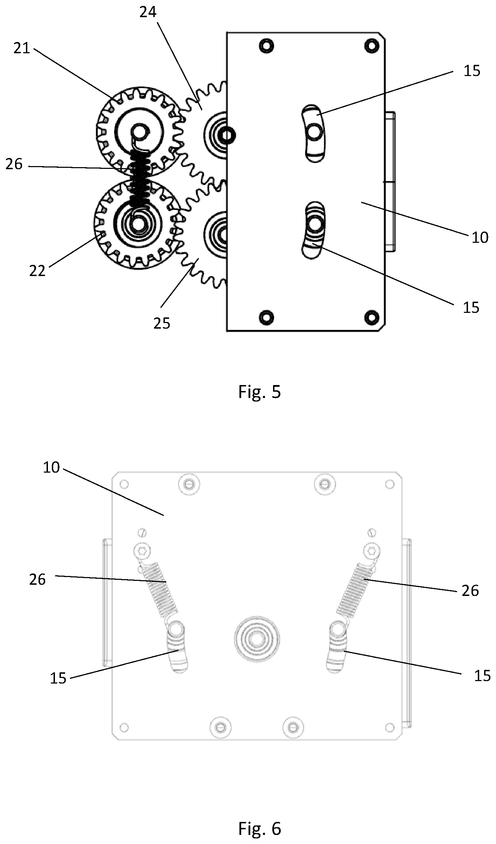

Referring to Fig. 5, in one exemplary embodiment, the first driven wheel 21 is fixed in position within the drivetrain enclosure 10 and is not movable relative to the conveying path. The fixed first driven wheel 21 thus establishes a stable reference point for the adaptive movement of the second driven wheel 22, which contributes to improved gear alignment and a simplified mechanical design. The second driven wheel 22 is mounted in a curved guide slot 15 formed in the drivetrain enclosure 10. The curved guide slot 15 defines a predetermined path along which the second driven wheel 22 is movable toward and away from the conveying path. A biasing mechanism 26 is arranged within the drivetrain enclosure 10 and is configured to urge the second driven wheel 22 and its corresponding roller toward the cable 5, such that the spacing between the rollers automatically adapts to the cable diameter. As the second driven wheel 22 moves to accommodate different cable diameters, meshing engagement between the second driven wheel 22 and the secondary gear 25 is maintained, thereby ensuring synchronized rotation.

It will be appreciated that, in alternative embodiments, the second driven wheel 22 may instead be fixed in position, while the first driven wheel 21 is movable along a corresponding guide slot. Such an arrangement operates according to the same principle and with a similar structural configuration, and is therefore not described in further detail herein.

This drivetrain arrangement is designed to handle a wide range of cable diameters. It also allows conveying cables over extended distances depending on application conditions. The drivetrain arrangement ensures synchronized rotation of all rollers regardless of their relative positions within the enclosure and provides robust torque transmission, minimizing slippage even when pushing cables over long distances or through conduits with high friction.

During operation, the cable 5 is inserted into the entry funnel 13. The rollers 20, urged inward by the biasing mechanism 26, automatically grip the cable 5. When the motor 4 is activated, the drive gear 24 rotates, transferring rotation to the first driven wheels 21 and through the secondary gear 25 to the second driven wheels 22, thus to the rollers 20, which convey the cable 5 along the conveying path. If a thicker cable is inserted, the second driven wheel 22 moves along the curved guide slot 15 to increase the spacing between rollers 20 while maintaining proper preload and gear engagement. As the cable 5 is conveyed, it exits through the deflector 14, which directs it into the intended conduit or installation opening. The tool 1 therefore provides automatic adaptation to cable size, reliable conveying performance, and improved handling for a wide range of installation environments.

The wire pushing tool 1 is configured to be a convenient handheld device that directly pushes cables or wires into support structures such as conduits without the need for additional tools such as a fish tape. This enables faster cable feeding and simplifies operation with forward, backward, and brake functions, thereby enhancing established installation workflows. Of course, other than electrical cables such as wires, fish tape, satellite cables, etc. may be handled with the wire pushing tool 1, too. The wire pushing tool 1 supports customers in achieving a fast, easy, and convenient cable installation process, as well as efficient cable removal. At the same time it allows also pulling of cables or any other element such as a fish tape and so support the user alternative with conventional pulling method
Although the present invention has been described in accordance with preferred embodiments, it is obvious for the person skilled in the art that modifications are possible in all embodiments.

## Claims

1. A wire pushing tool (1) for conveying a cable (5) along a conveying path, comprising:
• a drivetrain enclosure (10);
• a plurality of rollers (20) arranged to engage and convey the cable (5) ;
• a plurality of driven wheels comprising first driven wheels (21) and second driven wheels (22), wherein each driven wheel (21, 22) is rotationally fixed to a corresponding one of the rollers (20), or is formed integrally with the corresponding roller (20) so as to be rotationally fixed thereto;
• a drive gear (24) operatively connected to a motor (4) and rotatable about a drive axis, the drive gear (24) being arranged to mesh with and drive at least one of the first driven wheels (21);
• a secondary gear (25) meshing with the drive gear (24) and arranged to mesh with and drive at least one of the second driven wheels (22), such that rotation of the drive gear (24) drives the driven wheels (21, 22) and the corresponding rollers (20) in synchronized rotation; and
• a biasing mechanism (26) configured to urge the first driven wheel (21) and/or the second driven wheel (22) and the respective corresponding roller (20) toward the cable (5) so that a spacing between the rollers (20) automatically adapts to a diameter of the cable (5).

2. The wire-pushing tool (1) of claim 1, wherein each roller (20) comprises a cable-contacting surface which is concave, convex, angled, or flat.

3. The wire pushing tool (1) of claim 2, wherein the cable-contacting surface is concave and arranged to center the cable (5).

4. The wire pushing tool (1) of any of the preceding claims, wherein the plurality of rollers (20) comprises at least two rollers arranged on opposite sides of the conveying path.

5. The wire pushing tool (1) of any of the preceding claims, wherein the plurality of rollers (20) comprises four rollers arranged symmetrically around the conveying path.

6. The wire pushing tool (1) of any of the preceding claims, wherein the tool comprises a handle in which a motor (4) and a transmission mechanism are housed, and wherein the drive gear (24) is connected to the transmission mechanism, which is coupled to the motor (4).

7. The wire-pushing tool (1) of any of the preceding claims, wherein the biasing mechanism (26) comprises at least one spring arranged to apply a preload to the first driven wheel (21) and/or the second driven wheel (22), wherein any driven wheel to which the preload is applied is movable relative to the conveying path so as to automatically adapt the spacing between the rollers (20) to different cable diameters without user adjustment.

8. The wire pushing tool (1) of claim 7, wherein the first driven wheel (21) is fixed in position within the drivetrain enclosure (10) and is not movable relative to the conveying path, and wherein the second driven wheel (22) is mounted in a guide slot formed in the drivetrain enclosure (10) so as to be movable along the guide slot.

9. The wire pushing tool (1) of claim 7, wherein the second driven wheel (22) is fixed in position within the drivetrain enclosure (10) and is not movable relative to the conveying path, and wherein the first driven wheel (21) is mounted in a guide slot formed in the drivetrain enclosure (10) so as to be movable along the guide slot.

10. The wire pushing tool (1) of claim 8 or 9 , wherein the guide slot defines a predetermined movement path for the driven wheel mounted in the guide slot, permitting displacement toward and away from the conveying path while maintaining meshing engagement with the corresponding drive gear (24) or secondary gear (25).

11. The wire pushing tool (1) of claim 10, wherein the guide slot is shaped to permit arcuate, radial, or pivot-like movement of the driven wheel mounted in the guide slot to enable automatic adaptation of the spacing between the rollers (20) to different cable diameters.

12. The wire pushing tool (1) of any of the preceding claims, further comprising an entry cable funnel arranged at an entry side of the drivetrain enclosure (10) and configured to guide the cable (5) toward the rollers (20) during insertion.

13. The wire pushing tool (1) of any of the preceding claims, further comprising an exit-side cable deflector arranged downstream of the rollers (20), which is flexible and configured to bend the cable (5).

14. The wire pushing tool (1) of any of the preceding claims, wherein the rotational speed of the drive gear (24) is automatically adjusted based on a detected cable diameter.
